# EUROPEAN PATENT SPECIFICATION

(11) **EP 2 208 614 B1**
(45) Date of publication and mention of the grant of the patent: **12.03.2014**
(21) Application number: 10000241.9
(22) Date of filing: 13.01.2010
(51) Int. Cl.: B32B 13/10, B32B 21/00, E04C 2/00

(54) **Mineral-coated textile surfaces for wood materials**
Mit Mineralien beschichtete Stoffoberflächen für Holzmaterialien
Surfaces textiles revêtues de minéraux pour matériaux en bois

(30) Priority: 14.01.2009 DE 102009004970
(43) Date of publication of application: 21.07.2010
(73) Proprietor: Johns Manville Europe GmbH, 86399 Bobingen (DE)
(72) Inventor: Ketzer, Michael, 97903 Collenberg (DE); Gleich, Klaus, Highland Ranch, CO 80126 (US)
(74) Representative: Mai, Dörr, Besier

(56) References cited:
- CA-A1- 2 517 733
- DE-A1-102007 008 423
- GB-A- 1 399 402
- DATABASE WPI Week 198152 Thomson Scientific, London, GB; AN 1981-95678D XP002576895 -& JP 56 146555 A (SANYO KOKUSAKU PULP CO) 14 November 1981 (1981-11-14)

## Description

The present invention relates to a composite material consisting of a wood material base support and a textile surface which is applied by means of adhesives and provided with a mineral coating. The composite material acts as a substitute for conventional wood material boards in the construction field, which are covered with plasterboard.

Previously, in construction / wood frame construction in residential buildings, properties close to residential areas and other buildings, plasterboards or similar mineral boards have been mounted on the wood base support boards (engineered wood boards such as chipboard, OSB, MDF/LDF, plywood, lightweight construction boards or the like) in a separate process step. The joins which arise in the process, in particular in the region of the abutting edges, can be covered later with a suitable fine filler. The same applies for the fastening points of the plasterboards on the wood base support (for example screws/nails and the like).

The function of the mineral or plasterboards is among other things to create a base for decorative finishes (for example wallpaper, paint) on the respective inner side and at the same time to fulfil certain fire protection requirements.

Mounting mineral or plasterboards on the wood elements on site at the construction site or in prefabricated construction results in increased work and considerable added costs.

Therefore the object is to provide a composite material which avoids the above-described disadvantages and can be produced in a cost-effective manner.

The present invention provides a remedy and solves this problem by laminating a mineral-coated nonwoven material mounted and adhesively bonded to a wood base support. The mounting and finishing of the composite materials produced according to the invention can be carried out in a simpler and more cost-effective manner, as the finished composite material according to the invention can be mounted in just one process step.

The subject matter of the present invention is a composite material as defined in claim 1.

The textile fabric acts as a support for the mineral coating, which is applied to the textile surface by means of coating installations. The coated textile fabric is then laminated onto the wood material base support and adhesively bonded to the latter.

The mineral-coated textile fabric is connected to the surface of the wood material base support by means of a suitable adhesive. To this end, an adhesive layer is first applied to the surface of the wood material base support and then the coated textile fabric is compressed or laminated with the wood material base support, for example by means of rolling. After drying and any necessary finishing, the composite material according to the invention is ready for its end use.

Both the components - the textile fabric and the mineral coating - reduce the occurrence and spread of fire. At the same time, a homogenous, stable and smooth surface is provided for further use. Multiple application of paint is no longer necessary owing to the surface quality.

The subject matter of the present invention is thus a composite material comprising:
a) at least one wood material support,
b) at least one textile fabric which is applied to at least one of the two sides of the wood material support,
**characterised in that** the textile fabric has
(i) at least one mineral coating,
(ii) said mineral coating is only applied to the side of the textile fabric which faces away from the wood material support,
(iii) said mineral coating penetrates the textile fabric at least partially, but does not form a complete, flat and completely covering coating, so that at least parts of the textile fabric are still in direct contact with an adhesive layer,
(iv) said adhesive layer is present between the wood material support and the textile fabric and
(v) said adhesive layer has a thickness of at least 0.5 mm.

In a preferred embodiment of the invention, the mineral coating and / or the adhesive layer contains further functional materials.

The wood material base support used according to the invention is preferably wood materials such as boards, with it being possible for these to have additional wood material structures such as frames, grids or three-dimensional reinforcement structures, which are known as honeycombs, which further reinforce the wood materials.

The wood materials are plate- or thread-shaped wood materials which are produced by mixing the different wood particle shapes with natural and/or synthetic binders in the course of a hot pressing process. The wood materials which are used according to the invention preferably comprise plywood or laminated wood, woodchip material, in particular chipboards and OSB (oriented strand boards), wood fibre material, in particular porous wood fibreboards, vapour-permeable wood fibreboards, hard (high-density) wood fibreboards (HDF) and medium-density wood fibreboards (MDF), and Arboform. Arboform is a material consisting of lignin and other wood constituents, which can be processed thermoplastically.

The textile fabric used according to the invention is any fabric which is produced from fibres and from which a textile has been produced by means of a surface-forming technology.

The fibre-forming materials are preferably fibres consisting of synthetic polymers, ceramic fibres, mineral fibres or glass fibres, with it also being possible for these to be used in the form of mixtures. If fibre mixtures are present, they can also contain cellulose or natural fibres. Textiles mean wovens, scrims, knitted fabrics, mesh and nonwoven fabrics, preferably nonwoven fabrics.

The textile fabric can also have a reinforcement consisting of fibres, threads or filaments. This is useful in particular if the textile fabric is subjected to high mechanical stresses. Multifilaments or rovings based on glass, polyester, carbon or metal are preferred as reinforcement threads. The reinforcement threads can be used as such or else in the form of a textile fabric, for example as a woven, scrim, knitted fabrics, mesh or nonwoven fabric. The reinforcements preferably consist of a parallel yarn sheet or a scrim.

The textile surfaces consisting of mineral and ceramic fibres are aluminosilicate, ceramic, dolomite, wollastonite fibres or fibres of vulcanites, preferably basalt, diabase and/or melaphyre fibres, in particular basalt fibres. Diabase and melaphyre are referred to together as paleobasalts, and diabase is also popularly known as greenstone.

The mineral fibre nonwoven can be formed from filaments, that is, long continuous fibres, or from staple fibres. The average length of the staple fibres in the nonwoven used according to the invention consisting of mineral fibres is between 5 and 120 mm, preferably 8 to 90 mm. In a further embodiment of the invention, the mineral fibre nonwoven contains a mixture of continuous fibres and staple fibres.

The average fibre diameter of the mineral fibres is between 5 and 30 µm, preferably between 8 and 24 µm, particularly preferably between 8 and 16 µm.

The weight per unit area of the textile fabric consisting of mineral fibres is between 15 and 500 g/m², preferably between 40 and 250 g/m², with this data referring to a surface fabric without a mineral coating.

Nonwovens are in particular preferred as textiles consisting of glass fibres. These are made up of filaments, that is, long continuous fibres or from staple fibres. The average length of the staple fibres is between 5 and 120 mm, preferably 8 to 90 mm. In a further embodiment of the invention, the glass fibre nonwoven contains a mixture of continuous fibres and staple fibres.

The average diameter of the glass fibres is between 5 and 30 µm, preferably between 8 and 24 µm, particularly preferably between 10 and 21 µm.

In addition to the above-mentioned diameters, what are known as glass microfibres can also be used. The preferred average diameter of the glass microfibres is between 0.1 and 5 µm. The microfibres which form the textile surface can also be present in mixtures with other fibres, preferably glass fibres. A layer-like structure consisting of microfibres and glass fibres is also possible, or else the setting of a gradient with which the content of microfibres increases towards the side of the textile fabric which faces away from the support.

The weight per unit area of the textile fabric consisting of glass fibres is between 15 and 500 g/m², preferably between 40 and 250 g/m², with this data referring to a surface fabric without a mineral coating.

Suitable glass fibres comprise those which have been produced from A-glass, E-glass, S-glass, C-glass, T-glass or R-glass.

The textile surface can be produced by any known method. In the case of glass nonwovens, this is preferably the dry or wet lay method.

Of the textile surfaces consisting of fibres consisting of synthetic polymers, nonwovens, in particular what are known as spunbonds, that is, spunbonded nonwovens which are produced by randomly laying melt-spun filaments, are preferred. They consist of continuous synthetic fibres consisting of polymer materials which can be melt-spun. Suitable polymer materials are for example polyamides such as polyhexamethylene diadipamide, polycaprolactam, aromatic or partially aromatic polyamides ("aramides"), aliphatic polyamides such as nylon, partially aromatic or fully aromatic polyesters, polyphenylene sulphide (PPS), polymers with ether and keto groups such as polyether ketones (PEK) and polyether ether ketone (PEEK), polyolefins such as polyethylene or polypropylene, cellulose or polybenzimidazole. In addition to the above-mentioned synthetic polymers, polymers which are spun from solution are also suitable.

The spunbonded nonwovens preferably consist of polyesters which can be melt-spun. All known types which are suitable for fibre production can in principle be considered as the polyester material. Polyesters which contain at least 95 mol % polyethylene terephthalate (PET), in particular those consisting of unmodified PET, are particularly preferred.

The individual linear densities of the polyester filaments in the spunbonded nonwoven are between 1 and 16 dtex, preferably 2 to 10 dtex.

In a further embodiment of the invention, the spunbonded nonwoven can also be a holt-melt binder-consolidated nonwoven material which contains support and hot-melt adhesive fibres. The support and hot-melt adhesive fibres can be derived from any desired thermoplastic, fibre-forming polymers. Such hot-melt binder-consolidated spunbonded nonwovens are described for example in EP-A-0,446,822 and EP-A-0,590,629.

In addition to continuous filaments (spunbonded method), the textile surfaces can also be made up of staple fibres or mixtures of staple fibres and continuous filaments. The individual linear densities of the staple fibres in the nonwoven are between 1 and 16 dtex, preferably 2 to 10 dtex. The staple length is 1 to 100 mm, preferably 2 to 50 mm, particularly preferably 2 to 30 mm. The textile fabric can also be built up of fibres of different materials in order to be able to achieve particular properties.

The filaments and/or staple fibres which make up the nonwoven materials can have a virtually round cross section or else other shapes such as dumbbell-shaped, kidney-shaped, triangular or tri- or multi-lobed cross sections. Hollow fibres and bi- or multi-component fibres can also be used. Furthermore, the hot-melt adhesive fibre can also be used in the form of bi- or multi-component fibres.

The fibres which form the textile fabric can be modified by customary additives, for example anti-static agents such as carbon black.

The weight per unit area of the textile fabric consisting of synthetic polymer fibres is between 10 and 500 g/m², preferably between 20 and 250 g/m².

The textile fabric can be produced without chemical binders. In order to achieve the necessary strengths for further processing of the surface fabric, thermoplastic binder polymers can also be introduced and/or known needling methods can be used. In addition to the possibility of mechanical strengthening, for example by calendering or needling, hydrodynamic needling should also be in particular mentioned here.

The textile fabrics are however preferably pre-strengthened with a chemical binder. The binders used preferably come from the group of binder systems which are compatible with the coating material. The binder component is at most 30 % by weight.

The methods for producing mineral-coated textile fabrics, in particular nonwovens, are known per se. Suitable materials are applied to a mostly strengthened textile fabric, preferably a binder-consolidated nonwoven, by means of customary methods. Standard coating methods such as foam coating, dip methods, doctor blades etc. are used. After the coating has been applied, the coated material is dried by known methods.

The mineral coatings consist of flowable, paste-like materials, which in addition to water consist essentially of plaster, lime, chalk or similar inorganic components such as aluminium hydroxide. The components mentioned are used alone or in mixtures and/or also in mixtures with other inorganic or organic components. Polymer dispersions are typically used as the organic constituents, as binders, thickeners and dispersants. Such mineral masses are known in principle.

In addition to these base materials, the mineral coating mass or adhesive layer can contain further functional materials as additives. The additives are preferably materials for increasing fire-resistance (flame retardants), materials for conducting electrostatic charges, materials for screening electromagnetic radiation, organic or inorganic pigments, in particular coloured pigments.

The flame retardants are inorganic flame retardants, organophosphorus flame retardants, nitrogen-based flame retardants or intumescent flame retardants. Halogenated (brominated and chlorinated) flame retardants can likewise be used but are less preferred owing to their risk assessment. Examples of such halogenated flame retardants are polybrominated diphenyl ethers, for example DecaBDE, tetrabromobisphenol A and HBCD (hexabromocyclododecane).

The nitrogen-based flame retardants are melamines and ureas.

The organophosphorus flame retardants are typically aromatic and alkyl esters of phosphoric acid. TCEP (trichloroethyl phosphate), TCPP (trichloropropyl phosphate), TDCPP (tridichloroisopropyl phosphate), triphenyl phosphate, trioctyl phosphate (tris(2-ethylhexyl)phosphate) are preferably used.

The inorganic flame retardants are typically hydroxides such as aluminium hydroxide and magnesium hydroxide, borates such as zinc borate, ammonium compounds such as ammonium sulphate, red phosphorus, antimony oxides such as antimony trioxide and antimony pentoxide or vermiculites.

Anti-static and electromagnetic screening effects can be achieved by using means for increasing electrical conductivity.

Anti-static agents are usually particles which are electrically conductive. Suitable materials are electrically conductive carbons such as carbon black, graphite and carbon nanotubes, conductive plastics or fibres consisting of metal or metal constituents.

Materials for screening electromagnetic radiation are usually electrically conductive materials. These can be made up of the above-mentioned materials in the form of particles or fibres.

The inorganic or organic pigments are particle-like materials, in particular pigments which are also used in dyes.

The necessary application quantity of the mineral coating depends on the desired use and the textile fabric or base nonwoven used. A homogenous and pore-free surface is to be aimed for.

The application quantity of the mineral coating material is at least 25 % by weight, preferably 30 - 90 % by weight, particularly preferably 40 - 80 % by weight, in each case in relation to the total weight of the dried coated textile fabric, with the latter preferably being a nonwoven.

The mineral coating at least partially penetrates the textile fabric or the nonwoven. In a particularly preferred embodiment of the invention, the textile fabric which is provided with the mineral coating can still be rolled, that is, can be processed or stored in the form of rolls.

The mineral coating is configured in such a manner that the textile fabric is only coated on the side which faces away from the wood material support, that is, essentially on one side. The mineral coating penetrates the textile fabric at least partially, preferably completely, but does not form a complete, flat and completely covering coating, so that at least parts of the textile fabric are still in direct contact with the adhesive layer.

The mineral-coated textile fabric, in particular the mineral-coated textile nonwoven, is fixed or laminated onto the wood material support with the aid of an adhesive and adhesively bonded. To this end, suitable adhesives are first applied to the surface of the wood material support by known methods. Preferred methods are rolling, spraying or doctoring methods.

Suitable adhesives are materials which have a sufficient adhesive effect with respect to both the surface of the wood material support and the mineral-coated textile fabric. Construction adhesives, in particular tile adhesive, wall adhesive or similar materials are preferably suitable for this. These usually consist predominantly of mortar, plaster, cement, sand and/or chalk constituents. These adhesives can furthermore contain known additives for controlling the viscosity and binding behaviour.

The thickness of the adhesive layer applied in this manner in the composite material according to the invention is at least 0.5 mm, preferably 1 - 5 mm, particularly preferably 1.5 - 3 mm.

In addition to the application of an adhesive to the wood material support, adhesive films can also be used. Films which produce their adhesive effect directly when compressed can be used. Additionally, the use of hot-melt adhesive films is also possible. In this case the adhesive effect takes place thermoplastically on compression with the action of heat. When adhesive films are used, the thickness of the adhesive layer can be selected to be much smaller compared to the above-mentioned construction adhesives, with the thickness being no less than a minimum of 10 µm, preferably 20 µm. The maximum thickness of the adhesive films can be up to several millimetres. The use of very thick polymer films, what are known as polymer plates, is also possible.

The adhesive layer can also contain functional materials as additives, in particular those additives which result in an increase in fire-resistance or in improvement in electromagnetic screening. In order to increase electromagnetic screening, flat fabrics which can be applied together with the adhesive layer to the surface of the wood material support (for example aluminium foil), or as a part of the latter are also suitable.

In addition to the composite material, a further subject of the present invention is a method for producing the composite material, comprising the measures:
a) supplying a wood material support,
b) applying at least one adhesive layer to one of the surfaces of the wood material support,
c) applying the textile fabric to the adhesive layer formed according to b), with the textile fabric having at least one mineral coating,
d) laminating the structure obtained according to step c) with application of pressure and where necessary heat,
e) drying and finishing.

Insofar as the adhesive layer is to contain functional materials as additives, these can be mixed previously with the adhesive or else introduced during or after step b).

Instead of supplying a prefabricated wood material support, the wood material support can also be formed online.

If the adhesive is supplied as a film, it can be supplied separately, that is, the adhesive film does not necessarily have to be applied to the surface of the wood material support.

In a variant of the method, the adhesive layer can also be applied to the textile fabric which is provided with the mineral coating.

In addition to the composite material and the production method, the use of the composite material according to the invention for interior finishing of buildings is also a further subject of the present invention.

The composite material according to the invention can be used in interior finishing in construction / wood frame construction for residential buildings, buildings close to residential areas and other buildings as a substitute for conventional wood/plasterboard systems.

The product according to the invention provides a surface for final decoration, improves fire-inhibiting properties, reduces weight and eliminates additional assembly costs compared to conventional mineral boards.

The seams of the individual board boundaries can be covered manually with suitable filler material as is customary with plasterboards. The mineral-coated textile surface can be dyed and can thus contribute to final decoration.

## Claims

1. A composite material, comprising:
a) at least one wood material support,
b) at least one textile fabric which is applied to at least one of the two sides of the wood material support,
**characterised in that** the textile fabric has
(i) at least one mineral coating,
(ii) said mineral coating is only applied to the side of the textile fabric which faces away from the wood material support,
(iii) said mineral coating penetrates the textile fabric at least partially, but does not form a complete, flat and completely covering coating, so that at least parts of the textile fabric are still in direct contact with an adhesive layer,
(iv) said adhesive layer is present between the wood material support and the textile fabric and
(v) said adhesive layer has a thickness of at least 0.5 mm.

2. The composite material according to Claim 1, **characterised in that** the mineral coating and/or the adhesive layer contains further functional materials.

3. The composite material according to Claim 1 or 2, **characterised in that** the wood material base support is wood materials, preferably boards, with it being possible for these to have additional wood material structures such as frames, grids or three-dimensional reinforcement structures.

4. The composite material according to Claim 1 or 2, **characterised in that** the wood material base support is plate- or thread-shaped wood materials which are produced by mixing the different wood particle shapes with natural and/or synthetic binders in the course of a hot pressing process, preferably the wood material is plywood or laminated wood, woodchip material, in particular chipboards and OSB (oriented strand boards), wood fibre material, in particular porous wood fibreboards, vapour-permeable wood fibreboards, hard (high-density) wood fibreboards (HDF) and medium-density wood fibreboards (MDF), and a material consisting of lignin and other wood constituents, which can be processed thermoplastically.

5. The composite material according to Claim 1 to 4, **characterised in that** the textile fabric is a woven, scrim, knitted fabric, mesh and/or nonwoven fabric, preferably a nonwoven fabric.

6. The composite material according to Claim 1 to 5, **characterised in that** the textile fabric is made up of fibres consisting of synthetic polymers, ceramic fibres, mineral fibres or glass fibres, with these also comprising mixtures of the above-mentioned fibres.

7. The composite material according to Claim 1 to 6, **characterised in that** the textile fabric is formed from mineral and/or ceramic fibres, preferably from aluminosilicate, ceramic, dolomite, wollastonite fibres, or from fibres of vulcanites, preferably basalt, diabase and/or melaphyre fibres, in particular basalt fibres.

8. The composite material according to Claim 1 to 7, **characterised in that** the textile fabric is a mineral fibre nonwoven, preferably a nonwoven in which the average length of the mineral fibres is between 5 and 120 mm.

9. The composite material according to Claim 8, **characterised in that** the weight per unit area of the textile fabric consisting of mineral fibres is between 15 and 500 g/m², preferably between 40 and 250 g/m², with this data referring to a surface fabric without a mineral coating.

10. The composite material according to Claim 1 to 6, **characterised in that** the textile fabric is a glass fibre nonwoven, preferably a nonwoven in which the average length of the glass fibres is between 5 and 120 mm.

11. The composite material according to Claim 10, **characterised in that** the average diameter of the glass fibres is between 5 and 30 µm, preferably between 8 and 24 µm, particularly preferably between 10 and 21 µm, and/or between 0.1 and 5 µm.

12. The composite material according to Claim 10, **characterised in that** the glass fibre nonwoven is built up in a multi-layer manner, and the different layers have different glass fibre diameters, defined in Claim 11.

13. The composite material according to Claim 1 to 6 and 10 to 12, **characterised in that** the textile fabric comprises glass fibres, preferably a glass fibre nonwoven, and the weight per unit area is between 15 and 500 g/m², preferably between 40 and 250 g/m², with this data referring to a surface fabric without a mineral coating.

14. The composite material according to Claim 1 to 6, **characterised in that** the textile fabric comprises fibres consisting of synthetic polymers.

15. The composite material according to Claim 14, **characterised in that** the textile fabric is a nonwoven, in particular a spunbonded nonwoven.

16. The composite material according to Claim 15, **characterised in that** the nonwoven is a staple fibre nonwoven, the staple fibres of which have a length of from 1 to 100 mm, preferably from 2 to 50 mm, particularly preferably from 2 to 30 mm.

17. The composite material according to Claim 1 to 6 and 14 to 16, **characterised in that** the textile fabric is built up of fibres consisting of synthetic polymers, and the weight per unit area is preferably between 10 and 500 g/m², in particular between 20 and 250 g/m².

18. The composite material according to Claim 1 to 17, **characterised in that** the mineral coating comprises plaster, lime, chalk and/or aluminium hydroxide, preferably the application quantity of the mineral coating is at least 25 % by
weight, more preferably 30 - 90 % by weight, particularly preferably 40 - 80 % by weight, in each case in relation to the total weight of the dried coated textile fabric, with the latter preferably being a nonwoven.

19. The composite material according to Claim 1 to 18, charactedsed **in that** the adhesive layer comprises construction adhesives, in particular tile adhesive or wall adhesive, which preferably contain mortar, plaster, cement, sand and/or chalk constituents.

20. The composite material according to Claim 1 to 19, **characterised in that** the adhesive layer has a thickness of 1 - 5 mm, preferably 1.5 - 3 mm.

21. The composite material according to Claim 1 to 20, **characterised in that** the adhesive layer comprises a film, preferably a hot-melt adhesive film.

22. A method for producing the composite material according to Claim 1, comprising the measures:
a) supplying a wood material support,
b) applying at least one adhesive layer to one of the surfaces of the wood material support,
c) applying the textile fabric to the adhesive layer formed according to b), with the textile fabric having at least one mineral coating,
d) laminating the structure obtained according to step c) with application of pressure and where necessary heat,
e) drying and finishing.

23. The method according to Claim 22, **characterised in that** the adhesive layer can also be applied to the textile fabric which is provided with the mineral coating, so that the application of the adhesive layer to one of the surfaces of the wood material support can be omitted entirely or at least in part.

24. The method according to Claim 22, **characterised in that**, instead of supplying a prefabricated wood material support, the wood material support is formed online, preferably directly before applying the adhesive layer or the mineral-coated textile fabric which is provided with the adhesive layer.

25. Use of the composite material defined in Claims 1 to 21 for interior finishing of buildings, preferably in construction or wood frame construction for residential buildings, buildings close to residential areas and other buildings.

## Patentansprüche

1. Verbundwerkstoff umfassend:
a) mindestens einen Träger aus Holzwerkstoff,
b) mindestens ein textiles Flächengebilde, das auf mindestens einer der beiden Seiten des Trägers aus Holzwerkstoff angebracht ist,
**dadurch gekennzeichnet, dass** das textile Flächengebilde Folgendes aufweist:
(i) mindestens eine Mineralische Beschichtung,
(ii) die mineralische Beschichtung nur auf der Seite des textilen Flächengebildes angebracht ist, die dem Träger aus Holzwerkstoff abgewandt ist,
(iii) die Mineralische Beschichtung zumindest teilweise in das textile Flächengebilde eindringt, ohne jedoch eine komplette, flache und vollständig deckende Beschichtung zu bilden, so dass zumindest Teile des textilen Flächengebildes weiterhin in direktem Kontakt mit einer Klebeschicht sind,
(iv) die Klebeschicht zwischen dem Träger aus Holzwerkstoff und dem textilen Flächengebilde vorhanden ist und
(v) diese Klebeschicht eine Dicke von mindestens 0,5mm aufweist.

2. Verbundwerkstoff nach Anspruch 1, **dadurch gekennzeichnet, dass** die mineralische Beschichtung und/oder die Klebeschicht weitere Funktionsmaterialien enthält bzw. enthalten.

3. Verbundwerkstoff nach Anspruch 1 oder 2, **dadurch gekennzeichnet, dass** es sich bei dem Grundträger aus Holzwerkstoff um Holzwerkstoffien handelt, vorzugsweise Bretter, wobei es möglich ist, dass diese zusätzliche Holzwerkstoffstrukturen wie beispielsweise Rahmen-, Gitter- oder dreidimensionale Verstärkungsstrukturen aufweisen.

4. Verbundwerkstoff nach Anspruch 1 oder 2, **dadurch gekennzeichnet, dass** es sich um den Grundträger aus Holzwerkstoff um bahn- und fadenförmige Holzwerkstoffien, welche durch Vermischung der unterschiedlichen Holzpartikelformen mit natürlichen und/oder synthetischen Bindemitteln während eines Heißpressvorgangs, wobei das Holzwerkstoff vorzugsweise Sperrholz oder Schichtholz, Holzspanwerkstoff, insbesondere Holzspanplatten und OSB-Platten (Oriented Strand Boards), Holzfaserwerkstoff, insbesondere poröse Holzfaserplatten, Dampf durchlässige Holzfaserplatten, harte (hochdichte) Holzfaserplatten (HDF) und mitteldichte Holzfaserplatten (MDF), und ein Material bestehend aus Lignin und andere Holzbestandteile, welche thermoplastisch verarbeitet werden können, ist.

5. Verbundwerkstoff nach Anspruch 1 bis 4, **dadurch gekennzeichnet, dass** das textile Flächengebilde ein Gewebe, Gelege, Gewirke, Netzwerk und/oder Vliesstoff, vorzugsweise ein Vliesstoff ist.

6. Verbundwerkstoff nach Anspruch 1 bis 5, **dadurch gekennzeichnet, dass** das textile Flächengebilde aus Fasern bestehend aus synthetischen Polymeren, Keramikfasern, Mineralfasern oder Glasfasern gebildet ist, wobei diese auch Mischungen aus den oben genannten Fasern umfassen.

7. Verbundwerkstoff nach Anspruch 1 bis 6, **dadurch gekennzeichnet, dass** das textile Flächengebilde aus Mineral- und/oder Keramikfasern, vorzugsweise aus Alumosilikat, Keramik, Dolomit, Wollastonit-Fasern, oder aus Vulkanit-Fasern, vorzugsweise Basalt, Diabas und/oder Melaphyr-Fasern, insbesondere Basalt-Fasern.

8. Verbundwerkstoff nach Anspruch 1, **dadurch gekennzeichnet, dass** das textile Flächengebilde ein Mineralfaservlies, vorzugsweise ein Vlies, in welchem die durchschnittliche Länge der Mineralfasern zwischen 5 und 120 mm beträgt.

9. Verbundwerkstoff nach Anspruch 8, **dadurch gekennzeichnet, dass** das Flächengewicht des textilen Flächengebildes aus Mineralfasern zwischen 15 und 500 g/m², vorzugsweise zwischen 40 und 250 g/m² beträgt, wobei sich diese Angaben auf ein Flächengebilde ohne mineralische Beschichtung beziehen.

10. Verbundwerkstoff nach Anspruch 1, **dadurch gekennzeichnet, dass** das textile Flächengebilde ein Glasfaservlies, vorzugsweise ein Vlies, in welchem die durchschnittliche Länge der Glasfasern zwischen 5 und 120 mm beträgt.

11. Verbundwerkstoff nach Anspruch 10, **dadurch gekennzeichnet, dass** das durchschnittliche Durchmesser der Glasfasern zwischen 5 und 30 µm, vorzugsweise zwischen 8 und 24 µm, besonders bevorzugt zwischen 0,1 und 5 µm beträgt.

12. Verbundwerkstoff nach Anspruch 10, **dadurch gekennzeichnet, dass** das Glasfaservlies mehrschichtig aufgebaut ist, und die verschiedenen Schichten weisen unterschiedliche Glasfaserdurchmesser auf, wie in Anspruch 11 definiert.

13. Verbundwerkstoff nach Anspruch 1 bis 6 und 10 bis 12, **dadurch gekennzeichnet, dass** das textile Flächengebilde Glasfasern, vorzugsweise Glasfaservlies, umfasst und das Flächengewicht zwischen 15 und 500 g/m², vorzugsweise zwischen 40 und 250 g/m² beträgt, wobei sich diese Angaben auf ein Flächengebilde ohne mineralische Beschichtung beziehen.

14. Verbundwerkstoff nach Anspruch 1 bis 6, **dadurch gekennzeichnet, dass** das textile Flächengebilde Fasern aus synthetischen Polymeren umfasst.

15. Verbundwerkstoff nach Anspruch 14, **dadurch gekennzeichnet, dass** das textile Flächengebilde ein Vlies, insbesondere ein Spinnvlies, ist.

16. Verbundwerkstoff nach Anspruch 15, **dadurch gekennzeichnet, dass** das Vlies ein Stapelfaservlies, deren Stapelfasern eine Länge von 1 bis 100 mm, vorzugsweise von 2 bis 50 mm, besonders bevorzugt von 2 bis 30 mm aufweisen.

17. Verbundwerkstoff nach Anspruch 1 bis 6 und 14 bis 16, **dadurch gekennzeichnet, dass** das textile Flächengebilde aus Fasern bestehend aus synthetischen Polymeren gebildet ist, und das Flächengewicht vorzugsweise zwischen 10 und 500 g/m², insbesondere zwischen 20 und 250 g/m² beträgt.

18. Verbundwerkstoff nach Anspruch 1 bis 17, **dadurch gekennzeichnet, dass** die mineralische Beschichtung Gips, Kalk, Kreide und/oder Aluminiumhydroxid ist, vorzugsweise die Anwendungsmenge der Mineralische Beschichtung mindestens 25 Gew.-%, noch mehr bevorzugt 30 - 90 Gew.-%, besonders bevorzugt 40 - 80 Gew.-% ist, jeweils in Bezug auf das Gesamtgewicht des getrockneten beschichteten textilen Flächengebildes, wobei Letzteres vorzugsweise ein Vlies ist.

19. Verbundwerkstoff nach Anspruch 1 bis 18, **dadurch gekennzeichnet, dass** die Klebeschicht Bauklebstoffe, insbesondere Fliesenklebstoff oder Wandklebstoff umfasst, welche vorzugsweise Mörtel-, Gips-, Zement-, Sand-und/oder Kreidebestandteile beinhalten.

20. Verbundwerkstoff nach Anspruch 1 bis 19, **dadurch gekennzeichnet, dass** die Klebeschicht eine Dicke von 1 - 5 mm, vorzugsweise 1,5 - 3 mm aufweist.

21. Verbundwerkstoff nach Anspruch 1 bis 20, **dadurch gekennzeichnet, dass** die Klebeschicht einen Film, vorzugsweise einen Heißschmelzkleber-Film umfasst.

22. Verfahren zur Herstellung des Verbundwerkstoffes nach Anspruch 1, umfassend die Maßnahmen:
a) Bereitstellung eines Trägers aus Holzwerkstoff,
b) Aufbringen mindestens einer Klebeschicht auf mindestens eine der Seiten des Trägers aus Holzwerkstoff,
c) Aufbringen des textilen Flächengebildes auf die gemäß b) gebildete Klebeschicht, wobei das textile Flächengebilde mindestens eine mineralische Beschichtung aufweist,
d) Laminieren des gemäß Schritt c) erhaltenen Aufbaus unter Anwendung von Druck und ggf. Wärme,
e) Trocknen und Veredeln.

23. Verfahren nach Anspruch 22, **dadurch gekennzeichnet, dass** die Klebeschicht auch auf das textile Flächengebilde aufgebracht werden kann, welche die mineralische Beschichtung aufweist, so dass das Aufbringen der Klebeschicht auf eine der Oberflächen des Trägers aus Holzwerkstoff komplett oder mindestens teilweise weggelassen werden kann.

24. Verfahren nach Anspruch 22, **dadurch gekennzeichnet, dass**, statt der Bereitstellung eines vorgefertigten Trägers aus Holzwerkstoff, der Träger aus Holzwerkstoff online gebildet wird, vorzugsweise unmittelbar vor dem Aufbringen der Klebeschicht oder des mineral-beschichteten textilen Flächengebildes, welches die Klebeschicht aufweist.

25. Verwendung des Verbundwerkstoffs nach den Ansprüchen 1 bis 21 für den Innenausbau von Gebäuden, vorzugsweise im Bau oder Holzrahmenbau für Wohngebäude, Gebäude in der Nähe von Wohngebieten und anderen Gebäuden.

## Revendications

1. Matériau composite comprenant:
a) au moins un support en bois
b) au moins un tissu textile qui est appliqué au moins à l'un des deux côtés du support en bois,
**caractérisé en ce que** le tissu textile présente
(i) au moins un revêtement minéral
(ii) ledit revêtement minéral est seulement appliqué au côté du tissu textile qui est éloigné du support en bois
(iii) ledit revêtement minéral pénètre le tissu textile au moins partiellement, mais il ne forme pas un revêtement complète, plat et recouvrant complètement, de sorte qu'au moins parties du tissu textile soient encore en contact direct avec une couche d'adhésif,
(iv) ladite couche d'adhésif est présente entre le support en bois et le tissu textile et
(v) ladite présente une épaisseur d'au moins 0,5 mm.

2. Matériau composite selon la revendication 1, **caractérisé en ce que** le revêtement minéral et/ou la couche d'adhésif comprennent autres matériaux fonctionnels.

3. Matériau composite selon la revendication 1 ou 2, **caractérisé en ce que** le support à base de bois est un matériau en bois, préférablement des panneaux, avec celui étant possible pour ceux-ci d'avoir des structures en bois additionnelles telles que cadres, grilles ou structures de renforcement tridimensionnelles.

4. Matériau composite selon la revendication 1 ou 2, **caractérisé en ce que** le support à base de bois est un matériau en bois en forme de plaque ou fil qui est produit par le mixage de différentes formes de particules en bois avec des liants naturels et/ou synthétiques pendant un procédé de pressage à chaud, préférablement le matériau en bois est contre-plaqué ou bois stratifié, copeaux de bois, en particulier panneaux agglomérés et OSB (panneaux de copeaux orientés), matériau en fibres de bois, en particulier panneaux en fibres de bois poreux, panneaux en fibres de bois perméables à la vapeur, panneaux en fibres de bois (haute densité) durs (HDF) et panneaux en fibres de bois à densité moyenne (MDF), et un matériau formé de lignine et d'autres composants de bois, qui peuvent être traités par les procédés thermoplastiques.

5. Matériau composite selon la revendication 1 à 4, **caractérisé en ce que** le tissu textile est un produit tissé, canevas, tissu tricoté, filet et/ou produit non tissé, préférablement un produit non tissé.

6. Matériau composite selon la revendication 1 à 5, **caractérisé en ce que** le tissu textile est fait de fibres formées de polymères synthétiques, fibres céramiques, fibres minérales ou fibres de verre, comprenant aussi des mélanges des fibres susmentionnées.

7. Matériau composite selon la revendication 1 à 6, **caractérisé en ce que** le tissu textile est formé de fibres minérales et/ou céramiques, préférablement de fibres en silicate d'aluminium, en céramique, en dolomite, en wollastonite, ou de fibres en vulcanites, préférablement de fibres en basalte, en diabase et/ou en mélaphyre, en particulier de fibres en basalte.

8. Matériau composite selon la revendication 1 à 7, **caractérisé en ce que** le tissu textile est un non tissé de fibres minérales, préférablement un non tissé dans lequel la longueur moyenne des fibres minérales est entre 5 et 120 mm.

9. Matériau composite selon la revendication 8, **caractérisé en ce que** le poids par unité de surface du tissu textile formé de fibres minérales est entre 15 et 500 g/m², préférablement entre 40 et 250 g/m², avec ces données faisant référence à un tissu de surface sans un revêtement minéral.

10. Matériau composite selon la revendication 1 à 6, **caractérisé en ce que** le tissu textile est un non tissé de fibres de verre, préférablement un non tissé dans lequel la longueur moyenne des fibres de verre est entre 5 et 120 mm.

11. Matériau composite selon la revendication 10, **caractérisé en ce que** le diamètre moyen des fibres de verre est entre 5 et 30 µm, préférablement entre 8 et 24 µm, particulièrement préférable entre 10 et 21 µm, et/ou entre 0,1 et 5 µm.

12. Matériau composite selon la revendication 10, **caractérisé en ce que** le non tissé de fibres de verre est réalisé d'une manière multi- couche, et les différentes couches ont différentes diamètres des fibres de verre, définis dans la revendication 11.

13. Matériau composite selon la revendication 1 à 6 et 10 à 12, **caractérisé en ce que** le tissu textile comprend les fibres de verre, préférablement un non tissé de fibres de verre, et le poids par unité de surface est entre 15 et 500 g/m², préférablement entre 40 et 250 g/m², avec ces données faisant référence à un tissu de surface sans un revêtement minéral.

14. Matériau composite selon la revendication 1 à 6, **caractérisé en ce que** le tissu textile comprend les fibres formées de polymères synthétiques.

15. Matériau composite selon la revendication 14, **caractérisé en ce que** le tissu textile est un non tissé, en particulier un non tissé filé.

16. Matériau composite selon la revendication 15, **caractérisé en ce que** le non tissé est un non tissé de fibres courtes, les fibres courtes ayant une longueur de 1 à 100 mm, préférablement de 2 à 50 mm, particulièrement préférable de 2 à 30 mm.

17. Matériau composite selon la revendication 1 à 6 et 14 à 16, **caractérisé en ce que** le tissu textile est réalisé de fibres de polymères synthétiques, et le poids par unité de surface est préférablement entre 10 et 500 g/m², en particulier entre 20 et 250 g/m².

18. Matériau composite selon la revendication 1 à 17, **caractérisé en ce que** le revêtement minéral comprend plâtre, chaux, craie et/ou l'hydroxyde d'aluminium, préférablement la quantité d'application du revêtement minéral est d'au moins 25% en poids, plus préférablement 30-90% en poids, particulièrement préférable 40-80% en poids, en chaque cas en relation avec le poids total du tissu textile revêtu séché, avec ce dernière étant préférablement un non tissé.

19. Matériau composite selon la revendication 1 à 18, **caractérisé en ce que** la couche d'adhésif comprend les adhésifs de construction, en particulier les adhésifs de tuile ou de mur, qui comprennent préférablement de constituants de mortier, plâtre, cément, sable et /ou de craie.

20. Matériau composite selon la revendication 1 à 19, **caractérisé en ce que** la couche d'adhésif présente une épaisseur de 1-5 mm, préférablement 1,5-3 mm.

21. Matériau composite selon la revendication 1 à 20, **caractérisé en ce que** la couche d'adhésif comprend un film, préférablement un film adhésif thermofusible.

22. Procédé de production le matériau composite selon la revendication 1, comprenant les mesures:
a) fournir un support en bois,
b) appliquer au moins une couche d'adhésif à l'une des surfaces du support en bois,
c) appliquer le tissu textile à la couche d'adhésif formée selon b), avec le tissu textile ayant au moins un revêtement minéral,
d) stratifier la structure obtenue selon l'étape c) avec l'application de la pression et s'il est nécessaire de la chaleur,
e) sécher et finissage.

23. Procédé selon la revendication 22, **caractérisé en ce que** la couche d'adhésif peut aussi être appliquée au tissu textile qui est pourvu avec le revêtement minéral, de sorte que l'application de la couche d'adhésif à l'une des surfaces du support en bois puisse être omise en totalité ou au moins partiellement.

24. Procédé selon la revendication 22, **caractérisé en ce qu'**au lieu de fournir un support en bois préfabriqué, le support en bois est formé en ligne, préférablement de manière directe avant d'appliquer la couche d'adhésif ou le tissu textile à revêtement minéral qui est pourvu avec la couche d'adhésif.

25. Utilisation du matériau composite défini dans les revendications 1 à 21 pour la finition intérieure des bâtiments, préférablement dans les constructions ou dans la construction des cadres en bois pour les bâtiments résidentiels, les bâtiments proches de zones résidentielles et pour autres bâtiments.
